# EUROPÄISCHE PATENTSCHRIFT

(11) **EP 0 941 662 B1**
(45) Veröffentlichungstag und Bekanntmachung des Hinweises auf die Patenterteilung: **03.07.2002**
(21) Anmeldenummer: 99103384.6
(22) Anmeldetag: 22.02.1999
(51) Int. Cl.: A22C 11/10

(54) **Vorrichtung und Verfahren zum Trennen von Würsten**
Method and device for separating sausages
Procédé et dispositif de séparation de saucisses

(30) Priorität: 09.03.1998 DE 19810046
(43) Veröffentlichungstag der Anmeldung: 15.09.1999
(73) Patentinhaber: ALBERT HANDTMANN Maschinenfabrik GmbH & Co. KG, D-88396 Biberach (DE)
(72) Erfinder: Müller, Gerhard, 88433 Schemmerhofen (DE); Hummel, Karl, 88400 Biberach (DE)
(74) Vertreter: Grünecker, Kinkeldey, Stockmair & Schwanhäusser Anwaltssozietät

(56) Entgegenhaltungen:
- FR-A- 2 725 877
- GB-A- 1 414 102
- GB-A- 2 143 113

## Beschreibung

Die Erfindung betrifft eine Trennvorrichtung zum Trennen von Würsten an Abteilstellen entsprechend dem Oberbegriff des Anspruchs 1 und ein Verfahren zum Zerteilen von Wurststrängen entsprechend dem Oberbegriff des Anspruchs 22.

Eine gattungsgemäße Vorrichtung ist z.B. aus der EP 0440 039 B1 bekannt. Die dort beschriebene Wurstbefüllmaschine preßt durch ein Füllrohr Wurstbrät in eine schlauchförmige Wursthülle. Durch einen Abdrehmechanismus werden einzelne Wurstportionen gebildet, zwischen denen sich Abdreh- bzw. Abteilstellen befinden. Der so gebildete Wurststrang wird von zwei Förderbändern eines sogen. Längengerätes vorwärtsbewegt. Im Verlauf dieser Vorwärtsbewegung passiert der Wurststrang eine Trennvorrichtung, die den Wurststrang in einzelne Würste bzw. in Gruppen definierter Anzahl von Würsten an den Abteilstellen voneinander trennt. Bei der gattungsgemäßen Vorrichtung sind dazu rotierende Trennelemente zu beiden Seiten des Wurststranges vorgesehen, die auf Kreisbahnen gegenläufig umlaufen und am äußeren Ende Klingen bzw. korrespondierende Gegenhalter umfassen. Die Trennelemente sind so gelagert, daß die Klingen bzw. Gegenhalter an einem Punkt ihres Umlaufes derart zusammenwirken, daß der Wurststrang an einer Abteilstelle durchtrennt wird. Die Transportgeschwindigkeit des Wurststranges und die Rotationsgeschwindigkeit der Trennelemente sind dabei synchronisiert bzw. dem Produkt angepaßt.

Speziell bei der Befüllung von besonders kranzigen (gekrümmten) Wurstdärmen, z.B. Naturdärmen, im speziellen Schweinedärmen, liegen die Abdrehstellen oft bezüglich der Achse der einzelnen Würste dezentral. Daher ist es wünschenswert, wenn der Bereich, der von den Trennelementen quer zu den Würsten erfaßt wird, möglichst groß ist, so daß auch diese dezentrierte Abteilstellen durchtrennt werden. Diesem Bereich ist jedoch durch den Abstand der Förderbänder, d.h. dem Kaliber der Würste, eine Grenze gesetzt. Gerade besonders kranzige Darmmaterialien können am Rand der Trennelemente durchrutschen, so daß die Abteilstelle nicht durchtrennt wird. Gerade bei stark automatisierten Produktionslinien bedeutet ein dadurch entstehender Ausschuß einen Material- und ggf. auch einen Zeitverlust.

Aufgabe der vorliegenden Erfindung ist es ausgehend von diesem Stand der Technik, eine verbesserte Trennvorrichtung und ein Verfahren anzugeben, mit denen eine sichere Trennung von Würsten, im speziellen Naturdarmwürsten, unabhängig von der Lage der Abdrehstellen, möglich ist.

Diese Aufgabe wird durch eine gattungsgemäße Trennvorrichtung mit den Merkmalen des kennzeichnenden Teils des Anspruchs 1 und ein gattungsgemäßes Verfahren mit den Merkmalen des kennzeichnenden Teils des Anspruchs 22 gelöst.

Bei dem erfindungsgemäßen Verfahren werden die Förderbänder, die den Wurststrang an eine Trennvorrichtung heranführen, während des Schneidvorganges auf einen Abstand auseinandergezogen, der größer ist als das Wurstkaliber. Die erfindungsgemäße Vorrichtung weist dazu Einrichtungen auf, die im Bereich der Abteilstellen während des Eingriffs der beiden Trennelemente einen Abstand zwischen den Förderbändern erzeugen, der größer ist als das Wurstkaliber.

Während des Schneidvorganges ist quer zur Ausrichtung des Wurststranges also ein größerer Abstand zwischen den Förderbändern vorhanden. Dies ermöglicht z.B. eine größere Ausdehnung der Trennelemente quer zur Ausrichtung des Wurststranges, so daß auch extrem dezentrierte Abteilstellen erfaßt werden können. Im Falle, daß spezielle Zentrierelemente zusätzlich zu den Trennelementen vorgesehen sind, die vor dem Schnitt die Abteilstelle zentrieren sollen, ist es durch den vergrößerten Abstand möglich, daß diese Zentrierelemente einen größeren Bereich quer zur Ausrichtung des Wurststranges erfassen, so daß auch dann eine sichere Erfassung extrem dezentrierter Abteilstellen möglich ist. Da der größere Abstand zwischen den Förderbändern nur während des Schneidvorganges und nur im Schnittbereich eingestellt wird, sind die Zeit und die Länge, auf der die Förderbänder nicht an den Wurststrang anliegen, nur kurz, so daß keine Gefahr des Schlupfes zwischen dem Wurststrang und den Förderbändern besteht.

Vorteilhafte Ausführungsformen sind Gegenstand der abhängigen Ansprüche.

Die Trennelemente können z.B. von den Seiten zwischen die Förderbänder gegen die Abteilstelle geschoben werden und diese durchtrennen. Eine besonders sichere und vorteilhafte Ausführungsform sieht jedoch vor, daß die Trennelemente auf Kreisbahnen um jeweils eine Achse, die senkrecht zur Transportrichtung des Wurststranges, steht, gegenläufig umlaufen. So ist eine besonders schonende Trennung möglich, die die Gefahr der Verletzung des Darmmateriales reduziert.

Zur Erziehlung eines größeren Abstandes zwischen den Förderbändern, können diese z.B. mit Hilfe einer Kulisseneinrichtung oder einer Schiene auseinandergezogen werden. Besonders vorteilhaft ist es jedoch, wenn die Auseinanderspreizung der Förderbänder mit Hilfe von Abstandselementen erreicht wird, die mit den Trennelementen umlaufen.

Bei einer Ausführungsform sind dazu erste und zweite Abstandselemente vorgesehen, die mit einem der beiden Trennelemente umlaufen, wobei eines der beiden Abstandselemente beim Eingriff des ersten mit dem zweiten Trennelement ein erstes Förderband von dem Wurststrang fernhalten und das andere Abstandselement beim Eingriff des ersten mit dem zweiten Trennelement ein zweites Förderband von dem Wurststrang fernhalten, so daß beim Eingriff der beiden Trennelemente der Abstand der Förderbänder größer ist als das Kaliber des Wurststranges.

Bei dieser erfindungsgemäßen Ausführungsform können beide Abstandselemente zusammen mit einem der beiden Trennelemente auf einer gemeinsamen Achse umlaufen. Dies ermöglicht einen besonders kompakten Aufbau und eine einfache Herstellung, da nur der eine rotierende Trennkopf mit entsprechenden Abstandselementen ausgestattet werden muß. Andererseits kann auch das eine Abstandselement dem einen Trennelement zugeordnet werden und das andere Abstandselement dem anderen Trennelement. Eine solche Anordnung gewährleistet eine gleichmäßige Belastung der Drehachsen.

Eine besonders vorteilhafte Ausführungsform weist zusätzlich mindestens ein drittes und ein viertes Trennelement auf, wobei das dritte Trennelement zusammen mit dem ersten Trennelement auf einer Achse umläuft und das vierte Trennelement zusammen mit dem zweiten Trennelement auf einer Achse umläuft. Das dritte und das vierte Trennelement wirken bei ihrem Eingriff genauso zusammen wie das erste und das zweite Trennelement, um Abteilstellen zu trennen. Zur Erzeugung des größeren Abstandes zwischen den Förderbändern, wenn die dritten und vierten Trennelemente in Eingriff miteinander sind, dienen dritte und vierte Abstandselemente, die analog der Wirkungsweise der ersten und zweiten Abstandselemente die Förderbänder auseinanderziehen, wenn das dritte und vierte Trennelement in Eingriff kommen. Mehrere Trenn- und Abstandselemente, die jeweils gemeinsam auf einer Achse umlaufen, bedeuten eine gleichmäßige Belastung der jeweiligen Achsen. Außerdem kann eine größere Anzahl von Würsten in kürzerer Zeit getrennt werden. Dabei kann eine beliebige Anzahl von Trennelementen mit einer entsprechenden Anzahl von Abteilelementen auf einer Achse umlaufen. Besonders vorteilhafterweise werden jedoch je Achse zwei Trennelemente vorgesehen, die sich entgegengesetzt von der Achse weg erstrecken, so daß sich die einzelnen Trennelemente nicht behindern.

In vorteilhafter Ausgestaltung weisen die umlaufenden Abstandselemente eine in Umlaufrichtung vorlaufende abgeschrägte Kante auf, die zwischen das jeweilige Förderband und den Wurststrang tritt, um das Förderband von dem Wurststrang zu entfernen. Mit einer solchen Schräge erfolgt das Entfernen des Förderbandes von dem Wurststrang auf sichere Weise, ohne das eine Verletzung des Förderbandes oder des Wurststranges zu befürchten ist.

Zur Zentrierung der Abteilstelle kann ein Formelement vor wenigstens einem der beiden umlaufenden Trennelemente, die zur Abteilung zweier Würste zusammenwirken, auf der Kreisbahn vorauslaufen. Ein solches vorauslaufendes Zentrierelement greift auch in dem Bereich, in dem die Förderbänder durch die Abstandselemente auseinandergezogen sind, zwischen die Förderbänder. Auf diese Weise ist ein ungehinderter Lauf der Zentrierelemente möglich.

Bei der erfindungsgemäßen Vorrichtung können Formelemente zur Zentrierung eingesetzt werden, die eine Ausdehnung haben, die größer ist als das Kaliber einer Wurst. Ebenso können jedoch die Abstandselemente eine Zentrierschräge aufweisen, die mit dem Wurststrang in Kontakt kommt, wenn das jeweilige Abstandselement zwischen den Wurststrang und das Förderband tritt. Eine solche Zentrierschräge führt zu einer Vorzentrierung der Abteilstelle, die so noch sicherer den Trennelementen zugeführt wird.

Die Formelemente können zusätzlich derart ausgestaltet sein, daß während des Eingriffes von zwei Trennelementen die zu trennenden Würste einen ausreichenden Abstand aufweisen. Dies ist von Vorteil, wenn Material verarbeitet wird, bei dem eine ausreichende Streckung der Abteilstelle zwischen zwei Würsten nicht möglich ist. Werden die Formelemente z.B. aus V-förmigen, sich quer zum Wurststrang erstreckenden Flächen gebildet, so stellt sich zwischen zwei Würsten zumindest der Abstand zwischen dem Trennelement und dem ihm vorlaufenden Formelement ein. Durch Einsatz zusätzlicher Formelemente, die z.B. dem jeweils anderen Trennelement nachlaufen, das zur Zerteilung des Wurststranges mit dem ersten Trennelement zusammenwirkt, kann auch ein größerer Abstand erhalten werden.

Im folgenden wird eine Ausführungsform der erfindungsgemäßen Vorrichtung beschrieben und das erfindungsgemäße Verfahren erläutert. Dabei zeigt
- Figur 1: eine schematische Gesamtansicht einer Wurstbefüllungsmaschine mit einer erfindungsgemäßen Trennvorrichtung,
- Figur 2: ein Beispiel einer dezentrierten Abteilstelle,
- Figur 3: eine Seitenansicht eines Wurststranges während der Trennung in einer erfindungsgemäßen Trennvorrichtung,
- Figur 4: einen Wurststrang kurz vor der Trennung in einer erfindungsgemäßen Trennvorrichtung,
- Figur 5: eine Draufsicht auf den unteren Bereich einer erfindungsgemäßen Trennvorrichtung etwa auf dem Niveau D der Figur 3,
- Figur 6: eine Draufsicht auf den unteren Bereich einer erfindungsgemäßen Trennvorrichtung etwa auf dem Niveau D der Figur 4,
- Figur 7: eine Detailansicht eines Abstandselementes aus der Perspektive D der Figur 4,
- Figur 8: dasselbe Abstandselement der Figur 7 um 180° um die Achse X gedreht, und
- Figur 9a, b bzw. c: Ansichten der Schnittflächen, die sich beim Schnitt durch das Abstands-element der Figur 8 entlang der Flächen A, B bzw. C ergeben.

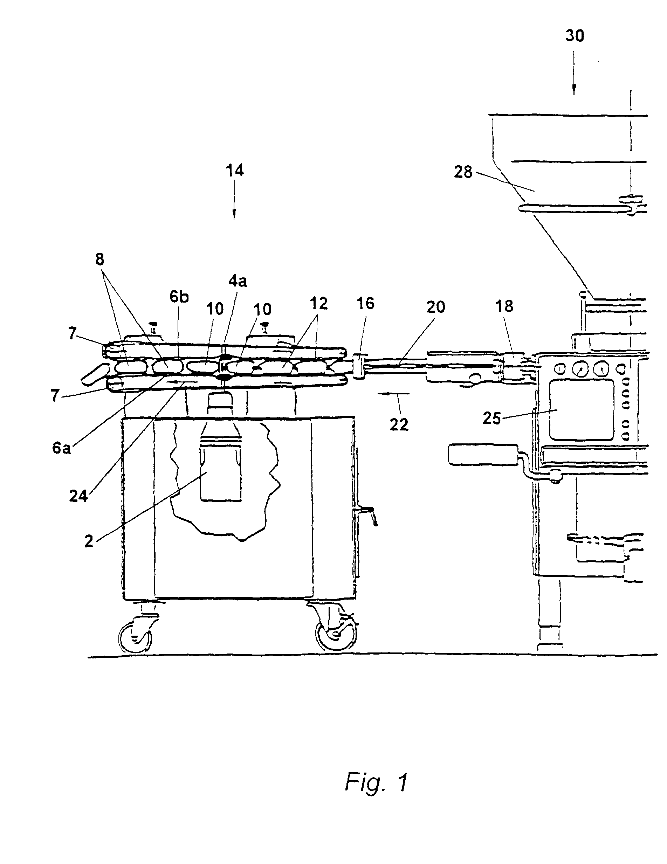

Die Gesamtansicht einer Wurstbefüllungsmaschine in Figur 1 zeigt einen Füllmaschinenhauptteil 30 mit einem Einfülltrichter 28 für das Wurstbrät. 20 bezeichnet ein Füllrohr, durch das Wurstbrät mit Hilfe einer in dem Maschinenhauptteil 30 angeordneten Flügelzellenpumpe in an sich bekannter Weise in Richtung 22 ausgestoßen wird. 16 bezeichnet ein Bremsringgetriebe, wie es z.B. aus dem europäischen Patent 0232 812 bekannt ist, welches zum Abbremsen der Wursthülle dient. 18 bezeichnet ein an sich bekanntes Abdrehgetriebe zur Bildung von Abdrehstellen zwischen den einzelnen Würsten. 12 zeigt einzelne Würste, die an den Abteilstellen, d.h. den Abdrehstellen miteinander verbunden sind.

4a, b bezeichnen Trennköpfe einer Trennvorrichtung, von denen hier nur ein Trennkopf 4a sichtbar ist. Bei dem gezeigten Zustand werden gerade zwei Würste 10 voneinander getrennt. 2 bezeichnet einen Motor, z.B. einen hochdynamischen drehzahlregelbaren Motor, der die umlaufenden Trennköpfe 4a, die sich zu beiden Seiten des Wurststranges befinden, antreibt. Die Trennköpfe 4a und 4b werden dabei von dem gemeinsamen Motor 2 über ein hier nicht weiter interessierendes Getriebe angetrieben. Ebenso sind zwei getrennte Motoren für die Trennelemente einsetzbar. Mit 8 sind bereits getrennte Würste bezeichnet. Der Wurststrang bzw. die Würste werden von zwei Endlosbändern 6a, b in Richtung 24 gefördert, die von Umlenkrollen 7 angetrieben werden. Die Gesamtheit der Endlosbänder mit ihrem Antrieb und der Trennvorrichtung wird als Längengerät 14 bezeichnet.

Eine Steuerung 25 dient der phasengenauen Abstimmung der Bewegungen der Endlosbänder 6a, 6b des Füllgutausstoßes durch das Füllrohr 20, des Abdrehgetriebes 18 und des Motors 2 der Trennvorrichtung.

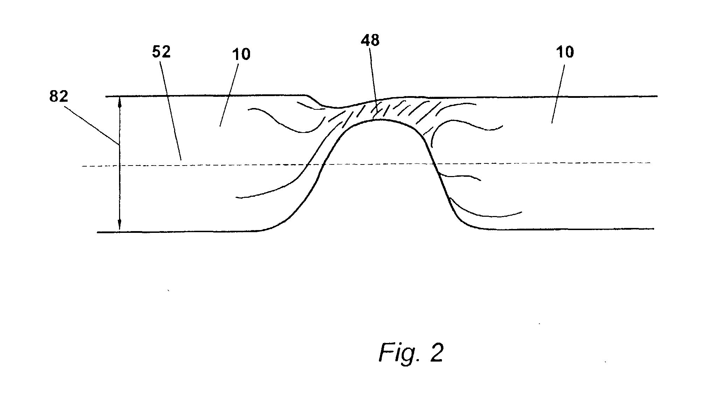

Figur 2 zeigt die Abteilstelle 48 zwischen zwei zu trennenden Würsten 10, die gegenüber der Mittelachse 52 der Würste dezentriert ist. 82 bezeichnet das Kaliber der Würste.

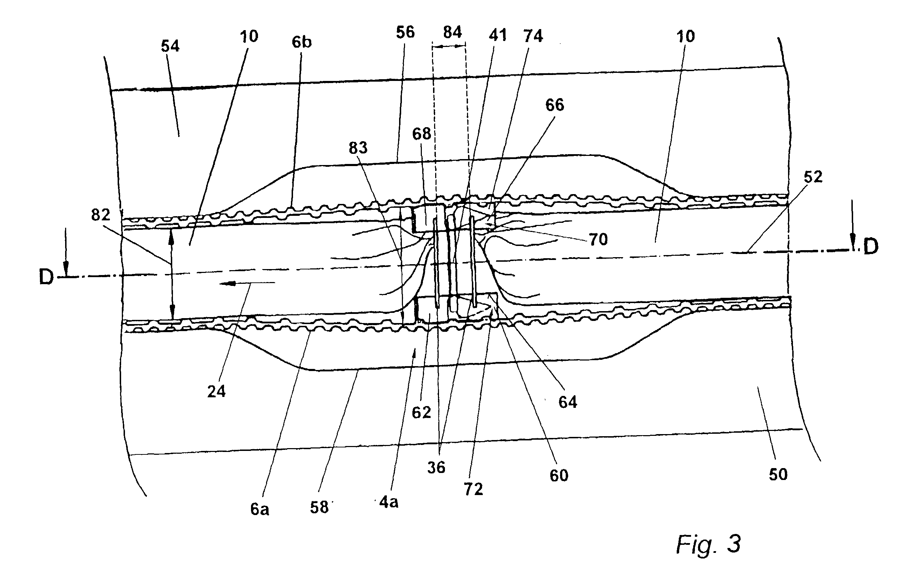

In Figur 3 sind beispielhaft Endlosbänder 6a und b gezeigt, die mit zusätzlichen Rippen ausgestattet sind, um den Schlupf zwischen Endlosband und Wurststrang zu verringern. Die Endlosbänder 6a, 6b können z.B. flexible Riemen sein, die an Führungen, bzw. Halterungen 50, 54 entlanglaufen. Diese Halterungen 50, 54 weisen im Schnittbereich Ausnehmungen 56, 58 auf. Während 83 den Abstand der Endlosbänder 6a und 6b im Schnittbereich bezeichnet, zeigt 84 beispielhaft den Abstand zwischen zwei Würsten 10 während des Abtrennprozesses. Dieser Abstand entspricht mindestens dem Abstand eines Formelementes 36 von den sich gerade im Eingriff befindlichen Trennelementen.

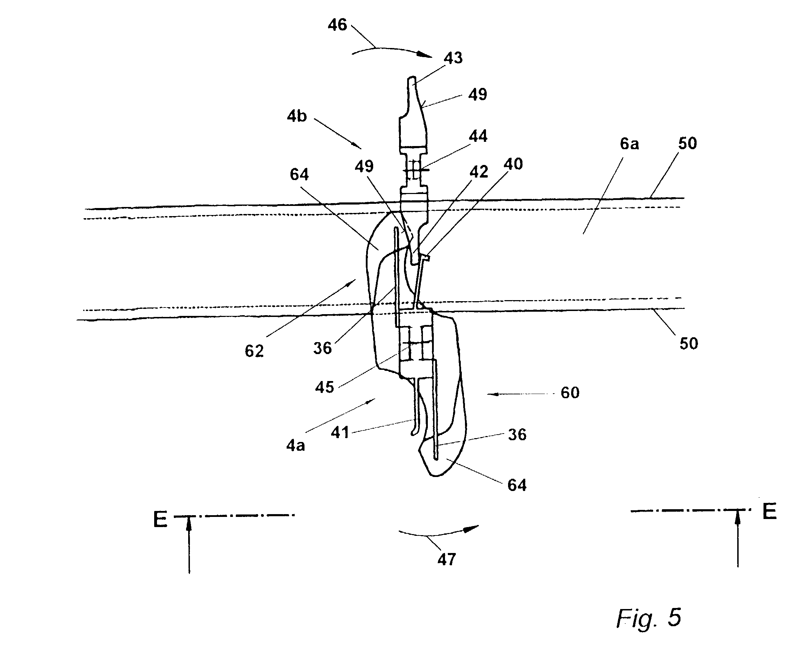

Zwischen den zwei Würsten ist in der Ansicht der Figur 3 der Trennkopf 4a zu sehen. Er umfaßt zwei untere Abstandselemente 62 und 60 und zwei obere Abstandselemente 68 und 66. Zwischen diesen befinden sich Trennelemente 41 und 40 (das in der Perspektive der Figur 3 nicht zu erkennen ist) und plattenförmige Formelemente 36. Der genaue Aufbau der Abstandselemente 60, 62, 66, 68 wird mit Bezug zu den Figuren 5 bis 9 detailliert erklärt.

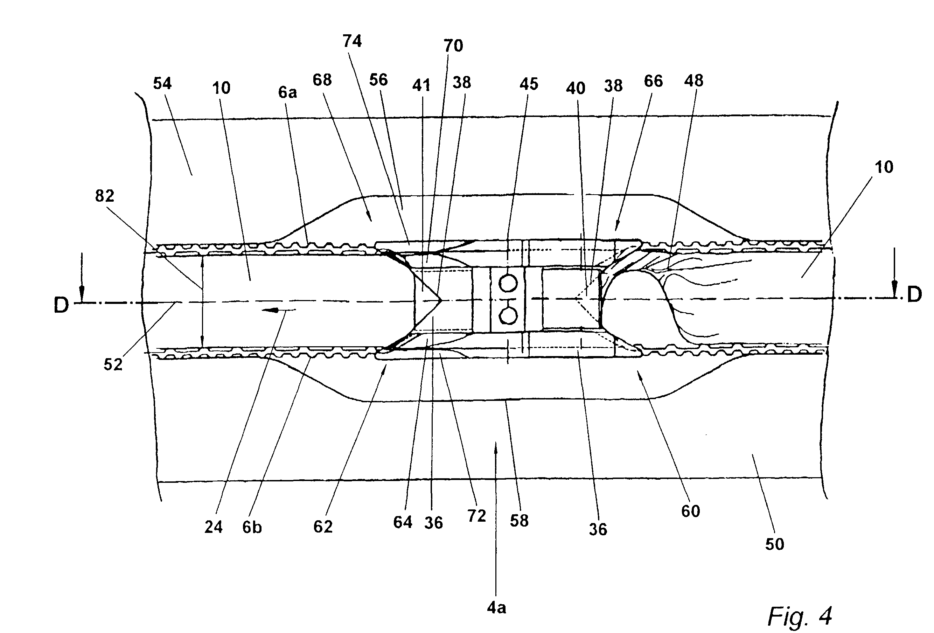

Figur 4 zeigt dieselbe Perspektive wie Figur 3, nur zu einem Zeitpunkt kurz bevor eine Abteilstelle 48 in den Schnittbereich eintritt. In dieser Perspektive sind die V-förmigen Ausschnitte 38 der Formelemente 36 zu erkennen. Im Gegensatz zur Figur 3 befinden sich zu dem Zeitpunkt, der in Figur 4 gezeigt ist, die Abstandselemente nicht zwischen den Förderbändern 6a, b.

In Figur 5 ist eine Draufsicht auf eine Schnittebene gezeigt, die der Ebene D der Figur 3 entspricht. Die Blickrichtung der Figur 3 ist in Figur 5 mit E bezeichnet. Figur 5 zeigt dementsprechend den unteren Bereich einer erfindungsgemäßen Trennvorrichtung während des Eingriffs zweier Trennelemente. Der Übersichtlichkeit halber ist der Wurststrang nicht eingezeichnet. Der Trennkopf 4a dreht sich in Richtung 47 um die Achse 45. Jedes Abstandselement 60, 62 weist eine Zentrierschräge 64 auf, die mit der vorlaufenden der zwei zu trennenden Würste in Verbindung tritt und zur Vorzentrierung der Abteilstelle 48 dient. 36 bezeichnet Formelemente, die bei der gezeigten Ausführungsform aus flächigen Elementen gebildet sind, die sich im wesentlichen parallel zu einer Linie erstrecken, die die Achse 45 senkrecht schneidet. Die V-förmige Ausgestaltung der Formelemente 36 ist in Figur 4 zu erkennen. Die V-förmigen Bereiche 38 der Formelemente 36 können einstellbar oder einstückig gebildet sein. Der Trennkopf 4a trägt zwei gegenüber angeordnete Gegenhalter 40, 41, die elastisch gelagert sind. Der Gegenhalter 40 ist mit einer der zwei Klingen 42, 43 des zweiten Trennkopfes 4b in Eingriff. Der zweite Trennkopf 4b läuft um eine Achse 44 in Richtung 46 um. Auf der jeweils vorlaufenden Seite des Trennkopfes 4b kann eine konkave Fläche 49 vorgesehen sein, die mit der vorlaufenden Wurst in Kontakt tritt und so eine Verletzung der Wursthülle vermeidet. Abweichend von der gezeigten Ausführungsform können beide Trennköpfe 4a, b mit Klingen ausgerüstet sein, die im Schneidbereich in Eingriff kommen. Weiterhin können zusätzliche Formelemente am zweiten Trennkopf 4b vorgesehen sein, die den Klingen 42, 43 nachlaufen, so daß die Würste während des Trennvorganges von einem Formelement 36 des ersten Trennkopfes 4a und einem Formelement des Trennkopfes 4b auf einem definierten Abstand gehalten werden.

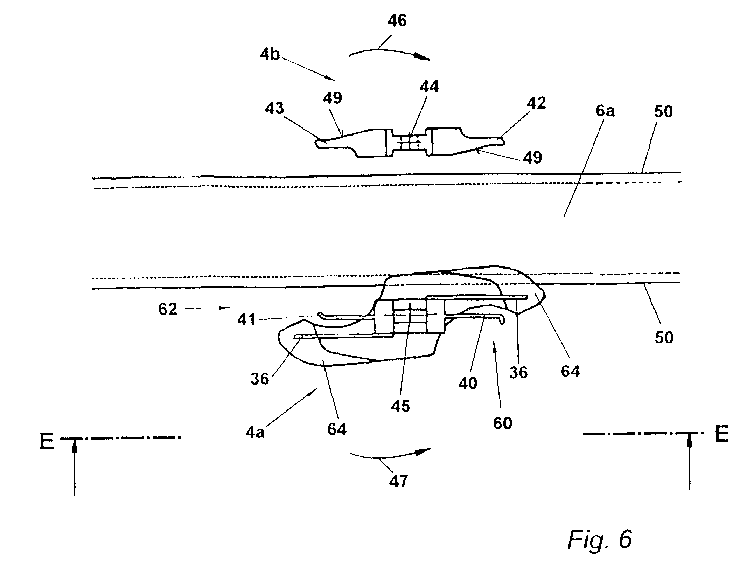

In Figur 6 ist eine der Figur 5 entsprechende Perspektive zu einem Zeitpunkt, der der Figur 4 entspricht, gezeigt, d.h., kurz bevor zwei Würste 10 voneinander getrennt werden sollen. Ebenso wie in der Figur 5 ist der Wurststrang der Übersichtlichkeit halber nicht gezeigt. Figur 6 zeigt eine Schnittansicht entsprechend der Ebene D der Figur 4. Dementsprechend zeigt auch Figur 6 nur den unteren Bereich der erfindungsgemäßen Trennvorrichtung. Die Perspektive der Figur 4 ist in Figur 6 mit E bezeichnet.

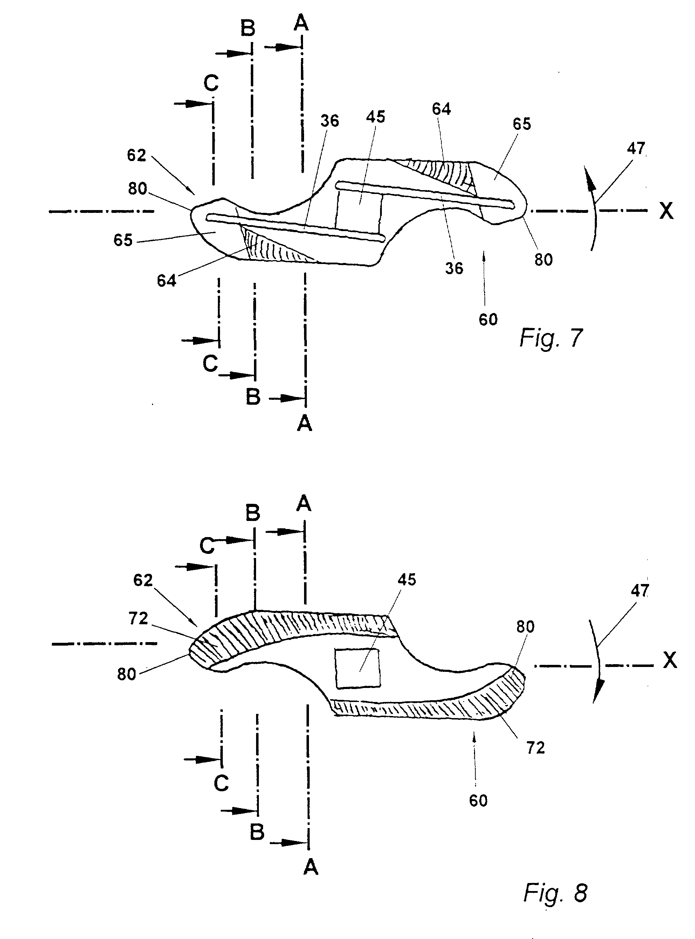

In Figur 7 sind im Detail die Abstandselemente 60, 62 gezeigt, wobei die Perspektive der Figur 5 bzw. der Figur 6 entspricht. 80 bezeichnet die abgerundeten Ecken, die radial über die Formelemente 36 hinausstehen. Die Zentrierschräge 64 besteht bei der in Figur 7 gezeigten Ausführungsform im Gegensatz zur in Figur 5 bzw. Figur 6 gezeigten Ausführungsform aus einem schrägen Bereich, der schraffiert gezeigt ist und einem im wesentlichen senkrecht zur Achse 45 ausgerichteten flächigen Bereich 65.

Figur 8 zeigt dasselbe Abstandselement um 180° um die Achse X der Figur 7 gedreht. In vorlaufender Richtung sind die Schrägen 72 gezeigt, die mit dem Förderband 6a in Kontakt treten.

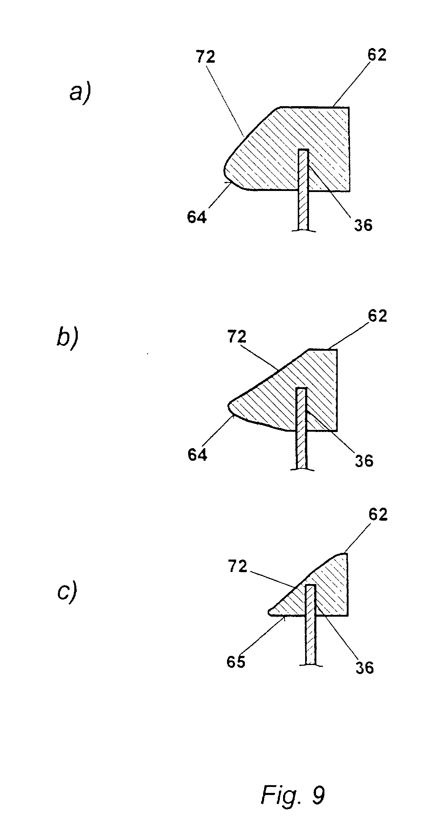

In der Figur 9 sind die Flächen gezeigt, die entstehen, wenn das Abstandselement 62, wie es in Figur 8 zu erkennen ist, entlang der Ebene A geschnitten und in dieser Perspektive betrachtet wird. Die Figuren 9b bzw. c entsprechen den Schnittflächen B bzw. C der Figur 8.

Die Figuren 5 bis 9 zeigen jeweils die unteren Abstandselemente 60, 62. Die oberen Abstandselemente 66, 68 (s. Figur 3, 4) weisen einen spiegelverkehrten, jedoch sonst anlogen Aufbau auf. Den Zentrierschrägen 64 entsprechen bei den oberen Abstandselementen die Zentrierschrägen 70 und den vorlaufenden Schrägen 72 der unteren Abstandselemente 60, 62 entsprechen bei den oberen Abstandselementen 66, 68 die vorlaufenden Schrägen 74.

In den beiden gezeigten Ausführungsformen befinden sich alle Abstandselemente 60, 62, 66, 68 am ersten Trennkopf 4a. Die Abstandselemente können jedoch auch auf die Trennköpfe 4a und 4b aufgeteilt sein. So können sich z.B. die oberen Abstandselemente an dem ersten Trennkopf 4a befinden, während sich die unteren Abstandselemente an dem zweiten Trennkopf 4b befinden. Ebenso ist denkbar, daß an jedem Trennkopf nur ein oberes und ein unteres Abstandselement derart übereinander angeordnet sind,daß sich beim Eingriff von je zwei Trennelementen nur die Abstandselemente eines Trennkopfes zwischen den Förderbändern 6a, 6b befinden.

Die Bezeichnungen "oben" und "unten" in dieser Beschreibung beziehen sich auf die Perspektive der Figuren 1, 3 und 4 und sind nicht als beschränkend auszulegen. In den genannten Figuren sind die Achsen 44, 45 senkrecht ausgerichtet. Ebenso ist auch jede andere Orientierung denkbar, z.B. eine waagerechte Ausrichtung der Achsen, d.h., daß die Trennelemente von oben und unten zwischen die Würste 10 greifen und die Förderbänder 6a, 6b sich seitlich von den Würsten befinden.

Das erfindungsgemäße Verfahren läuft mit der gezeigten Ausführungsform der erfindungsgemäßen Vorrichtung wie folgt ab. Wurstbrät wird durch den Trichter 28 in den Füllmaschinenhauptteil 30 eingebracht. Die nicht gezeigte Flügelzellenpumpe drückt das Wurstbrät durch das Füllrohr 20 in Richtung 22. Dabei wird in an sich bekannter Weise eine auf das Füllrohr aufgebrachte Wursthülle gefüllt und dabei gleichzeitig von dem Füllrohr 20 abgezogen. Das mit Wurstbrät gefüllte Hüllenmaterial wird von den Endlosbändern 6a, b des Längengerätes 14 erfaßt, die von den Umlenkrollen 7 in Richtung 24 angetrieben werden. Nach Ausstoß einer Wurstbrätportion, die einer Wurst entspricht, wird der Füllgutausstoß synchron mit den Endlosbändern 6a, b gestoppt bzw. in der Geschwindigkeit reduziert. Der gefüllte Teil des abgezogenen Hüllenmaterials wird von den Endlosbändern 6a, b gehalten, während das Abdrehgetriebe 18 das Füllrohr 20 zusammen mit dem noch ungefüllten Teil des Hüllenmateriales, der sich auf dem Füllrohr befindet, gedreht wird.

Auf diese Weise wird eine Abteilstelle 48 durch Abdrehen erzeugt. Um eine ausreichende Spannung des Hüllenmateriales zu gewährleisten, ist ein hier nicht weiter interessierendes Bremsringgetriebe 16 vorgesehen. Der zeitliche Ablauf der Bewegung der Flügelzellenpumpe in dem Maschinenhauptteil 30, des Abdrehgetriebes 18, des Bremsringgetriebes 16 und der Endlosbänder 16a, b wird von der Steuerung 25 vorgenommen, die entsprechende elektrische Signale in nicht hier interessierender Weise an die einzelnen Komponten übermittelt.

Die zu einzelnen Würsten 12 abgedrehten Portionen des Wurststranges werden von den Endlosbändern 6a, b an der Trennvorrichtung vorbeigeführt, deren Trennköpfe 4a, b seitlich zwischen die Endlosbändern 6a, b eingreifen, wie es in der Figur 3 bzw. der Figur 5 erkennbar ist. Der Motor 2 der Trennvorrichtung, der die beiden Trennköpfe 4a und 4b antreibt, wird ebenso von der Steuerung 25 zu einer entsprechenden synchronen Bewegung angetrieben. Die Phasenlagen der einzelnen Bewegungen werden aus Parametern, wie z.B der gewünschten Portionsmenge, der Füllgeschwindigkeit, des Kalibers oder der gewünschten Anzahl von Würsten, die zusammen eine Wurstkette bilden sollen, von der Steuerung 25 errechnet und vorgegeben.

Die Trennköpfe 4a, 4b zerteilen den Wurststrang an den Abteilstellen 48, so daß einzelne Würste 8 entstehen, die von den Endlosbändern 6a, b weiterbefördert werden, bis sie am Ende des Längengerätes 14 in einen Vorratsbehälter fallen bzw. weiterverarbeitet werden. Die Trennköpfe 4a, 4b können mit einer gleichförmigen Geschwindigkeit umlaufen. Je nach Geschwindigkeit des Wurststranges und dem Abstand der Abteilstellen 48 kann es jedoch notwendig sein, daß die Steuerung 25 während eines Umlaufes eines Trennkopfes 4a, 4b dessen Winkelgeschwindigkeit verändert. So wird z.B. bei längeren Würsten, die mit hoher Geschwindigkeit von den Endlosbändern 6a, b befördert werden, nur während des Zeitraumes, während dessen die Trennelemente mit dem Wurststrang in Berührung sind, die Drehgeschwindigkeit der Trennköpfe 4a, 4b entsprechend der Geschwindigkeit des Wurststranges angepaßt sein, während in dem Zeitraum, während dessen kein Trennelement mit dem Wurststrang in Berührung ist, die Drehgeschwindigkeit langsamer eingestellt wird, um längere Würste abteilen zu können.

Kommt nun eine Abteilstelle 48 aus einer Position heraus, wie sie in Figur 4 gezeigt ist, in den Schneidbereich der Trennvorrichtung, so wird durch die Rotation des Trennkopfes 4a ein Abstandselement 60, 62 zwischen die Abteilstelle und das untere Förderband 6a geschoben. Dabei läuft die Zentrierschräge 64 gegen die vorlaufende Wurst. Durch die Abschrägung wird eine Verletzung der Wursthaut verhindert. Andererseits läuft die Schräge 72 gegen das untere Förderband 6a. Durch die weitere Rotation des Trennkopfes 4a wird das Förderband 6a von dem Wurststrang weggespreizt. Auf gleiche Weise wirkt das Entsprechende der oberen Abstandselemente 66, 68 mit dem oberen Förderband 6b und den Wurststrang zusammen. In Figur 3 bzw. Figur 5 sind gerade die Abstandselemente 62 und 68 im Eingriff mit den Förderbändern 6a und 6b, während sich die Abstandselemente 60, 66 von dem Wurststrang weg erstrecken.

Die Zentrierschrägen 64 bzw. 70 der Abstandselemente 60, 62 bzw. 66, 68 sorgen für eine sichere Einführung der Abteilstelle 48 in die V-förmigen Bereiche 38 der Formelemente 36, deren Seitenansicht in der Figur 3 zu erkennen ist. Da die Förderbänder 6a, 6b durch die Abstandselemente auseinandergespreizt sind, können auf diese Weise auch Abteilstellen 48 erfaßt werden, die sehr stark dezentriert sind. Der V-förmige Öffnungsbereich 38 der Zentrierelemente 36 kann auf diese Weise weiter geöffnet sein, als es dem Kaliber 82 der Würste entspricht. Auch wenn dies nicht der Fall ist, so wird durch die Zentrierschrägen 64, 70 ein Erfassen von stark dezentrierten Abteilstellen 48 gesichert.

Sind die Trennköpfe 4a und 4b in der Position der Figur 5, so ist der Mindestabstand zwischen den zwei zu trennenden Würsten durch den Abstand zwischen dem Formelement 36, das dem Gegenhalter 40 vorausläuft, und den sich in Eingriff befindlichen Trennelementen 40, 42 bestimmt. Sind abweichend von der gezeigten Ausführungsform weitere Formelemente vorgesehen, von denen eines dem Gegenhalter 40 nachläuft, so bestimmt der Abstand eines vorauslaufenden Formelementes von einem nachlaufenden Formelement den Mindestabstand der Würste während des Abtrennens.

Ist der Trennkopf 4a in der Position der Figur 5 bzw. der Figur 3, so befindet sich der Trennkopf 4b in der Position der Figur 5. Durch die Zentrierelemente 36 ist die Abteilstelle 48 zumindest soweit zentriert, daß sie von der Klinge 42 bzw. dem Gegenhalter 40 erfaßt werden kann. Die Klinge 42 schneidet die Abteilstelle 48 gegen den Gegenhalter 40, der elastisch gelagert ist, durch. Die elastische Lagerung ermöglicht ein Zurückfedern der Gegenhalter 40, 41, so daß ein reibungsloser Verlauf des Schnittvorganges gewährleistet ist. Durch den sehr flach angeschrägten bzw. waagerechten Bereich 65 der Zentrierschräge 64 ist dabei gewährleistet, daß die Abstandselemente während des Eingriffes die Bewegung der Klingen 42, 43 des Trennkopfes 4b nicht behindern.

Die abgetrennte Wurst wird von den Förderbändern 6a, 6b weitergefördert. Die Trennköpfe 4a, 4b drehen sich weiter, so daß die Förderbänder 6a, 6b nicht mehr auseinandergespreizt sind, wenn sich die Trennköpfe 4a, 4b in der Position der Figur 6 bzw. der Figur 4 befinden. Auf diese Weise wird ein Schlupf zwischen den zu befördernden Würsten und den Endlosbändern 6a, 6b verhindert.

Das Auseinanderspeizen der Förderbänder 6a, 6b wird durch Aussparungen 56, 58 in den Führungen 50, 54 ermöglicht.

Die erfindungsgemäße Vorrichtung und das erfindungsgemäße Verfahren ermöglichen durch das Auseinanderziehen der Förderbänder 6a, 6b ein sicheres Erfassen von dezentrierten Abteilstellen 48. Dazu ermöglicht das Auseinanderziehen der Förderbänder Trennelemente ausreichender Breite bzw. Zentrierelemente, die einen ausreichend großen Bereich quer zu dem Wurststrang erfassen. Die erfindungsgemäße Vorrichtung stellt dabei sicher, daß die Förderbänder 6a, 6b den Bewegungsablauf der Trennköpfe 4a, 4b nicht behindern.

## Patentansprüche

1. Trennvorrichtung zum Trennen von Würsten 10 an Abteilstellen, die zwischen einzelnen Würsten eines Wurststranges gebildet sind, mit
mindestens zwei sich in gleicher Richtung bewegenden Förderbändern, 6a, 6b die den Wurststrang zwischen sich aufnehmen und transportieren,
mindestens einem ersten Trennelement 40, das auf einer ersten Seite des Wurststranges angeordnet ist, und mindestens einem zweiten Trennelement 42, das auf der zweiten Seite des Wurststranges angeordnet ist, wobei die Trennelemente derart angetrieben werden, daß sie zum Durchtrennen des Wurststranges an Abteilstellen zusammenwirken,
**gekennzeichnet durch**
Einrichtungen (60, 66) zur Erzeugung eines Abstandes (83) zwischen den Förderbändern (6a, 6b) im Bereich der jeweils zu trennenden Abteilstelle (48) während des Eingriffes der beiden Trennelemente (40, 42), der größer ist als das Wurstkaliber (82).

2. Trennvorrichtung nach Anspruch 1,
**dadurch gekennzeichnet, daß**
das mindestens eine erste Trennelement (40) auf einer Kreisbahn um eine erste Achse (45) und das mindestens eine zweite Trennelement (42) auf einer Kreisbahn um eine zweite (44) Achse gegenläufig umlaufen, wobei die Achsen (44, 45) senkrecht zur Transportrichtung (24) des Wurststranges (10, 12) stehen.

3. Trennvorrichtung nach Anspruch 2,
**dadurch gekennzeichnet, daß**
die Einrichtungen zur Erzeugung des Abstandes ein erstes mit einem der beiden Trennelemente (40, 42) umlaufendes Abstandselement (60) und ein zweites mit einem der beiden Trennelemente (40, 42) umlaufendes Abstandselement (66) umfassen, wobei eines der beiden Abstandselemente (60, 66) beim Eingriff des ersten mit dem zweiten Trennelement ein erstes Förderband (6a) von dem Wurststrang (10, 12) fernhält und das andere Abstandselement (66, 60) beim Eingriff des ersten mit dem zweiten Trennelement ein zweites Förderband (6b) von dem Wurststrang (10, 12) fernhält.

4. Trennvorrichtung nach Anspruch 3,
**dadurch gekennzeichnet, daß**
das erste und zweite Abstandselement (60, 66) zusammen mit dem ersten Trennelement (40) um eine gemeinsame Achse (45) umlaufen.

5. Trennvorrichtung nach Anspruch 3,
**dadurch gekennzeichnet, daß**
das erste und das zweite Abstandselement zusammen mit dem zweiten Trennelement (42) auf einer gemeinsamen Achse (44) umlaufen.

6. Trennvorrichtung nach Anspruch 3,
**dadurch gekennzeichnet, daß**
eines der Abstandselemente mit dem ersten Trennelement (40) auf einer gemeinsamen Achse (45) umläuft und eines der Abstandselemente mit dem zweiten Trennelement (42) auf einer gemeinsamen Achse (44) umläuft.

7. Trennvorrichtung nach einem der Ansprüche 3 bis 6,
**gekennzeichnet durch**
- mindestens ein drittes Trennelement (41), das zusammen mit dem ersten Trennelement (40) auf der ersten Achse (45) umläuft,
- mindestens ein viertes Trennelement (43), das zusammen mit dem zweiten Trennelement (42) auf der zweiten Achse (44) auf der anderen Seite des Wurststranges (10, 12) umläuft, wobei das dritte und das vierte Trennelement (41, 43) beim Umlauf derart zusammenwirken, daß der Wurststrang (10, 12) an Abteilstellen (48) durch-trennt wird,
- mindestens ein drittes Abstandselement (62), das entweder mit dem dritten oder dem vierten Trennelement umläuft,
- mindestens ein viertes Abstandselement (68), das entweder mit dem dritten oder dem vierten Trennelement umläuft,
wobei eines der dritten und vierten Abstandselemente (68) beim Eingriff des dritten (41) mit dem vierten Trennelement (43) ein erstes Förderband (6a) von dem Wurststrang (10, 12) fernhält und das jeweils andere der dritten und vierten Abstandselemente beim Eingriff des dritten (41) mit dem vierten Trennelement (43) ein zweites Förderband (6b) von dem Wurststrang (10, 12) fernhält.

8. Trennvorrichtung nach Anspruch 7,
**dadurch gekennzeichnet, daß**
das dritte und das vierte Abstandselement (62, 68) zusammen mit dem dritten Trennelement (41) zusammen auf einer gemeinsamen Achse (45) umlaufen.

9. Trennvorrichtung nach Anspruch 7,
**dadurch gekennzeichnet, daß**
das dritte und das vierte Abstandselement zusammen mit dem vierten Trennelement (43) zusammen auf einer gemeinsamen Achse (44) umlaufen.

10. Trennvorrichtung nach Anspruch 7,
**dadurch gekennzeichnet, daß**
eines der dritten und vierten Abstandselemente mit dem dritten Trennelement (41) zusammen auf einer gemeinsamen Achse (45) umläuft und das andere der dritten und vierten Abstandselemente mit dem vierten Trennelement (43) auf einer gemeinsamen Achse (44) umläuft.

11. Trennvorrichtung nach einem der Ansprüche 7 bis 10,
**dadurch gekennzeichnet, daß**
je Achse (44; 45) genau zwei Trennelemente (42, 43; 40, 41) vorgesehen sind, die sich von der jeweiligen Achse (44; 45) im wesentlichen in entgegengesetzter Richtung voneinander wegerstrecken.

12. Trennvorrichtung nach einem der Ansprüche 3 bis 11,
**dadurch gekennzeichnet, daß**
die Abstandselemente (60, 62, 66, 68) eine in Umlaufrichtung (46, 47) vorlaufende, abgeschrägte Kante (72, 74) aufweisen, die beim Umlauf zwischen das jeweils fernzuhaltende Förderband (6a, 6b) und den Wurststrang (10, 12) läuft, wobei die Schräge (72, 74) derart mit dem Förderband (6a, 6b) in Kontakt tritt, daß das Förderband von dem Wurststrang entfernt wird.

13. Trennvorrichtung nach einem der Ansprüche 3 bis 12,
**dadurch gekennzeichnet, daß**
sich die Abstandselemente (60, 62, 66, 68) weiter von der jeweiligen Achse wegerstrekken als die jeweiligen Trennelemente.

14. Trennvorrichtung nach einem der Ansprüche 3 bis 13,
**dadurch gekennzeichnet, daß**
die achsfernen Enden (80) der Abstandselemente (60, 62, 66, 68) abgerundet sind.

15. Trennvorrichtung nach einem der Ansprüche 3 bis 14,
**dadurch gekennzeichnet, daß**
die Abstandselemente (60, 62, 66, 68) auf der dem jeweiligen Trennelement (40, 41, 42, 43) zugewandten Seite eine Zentrierschräge (64, 70) aufweisen, um die Abteilstelle (48) dem jeweiligen Trennelement zuzuführen.

16. Trennvorrichtung nach einem der Ansprüche 2 bis 15,
**dadurch gekennzeichnet, daß**
jeweils wenigstens einem der beiden Trennelemente, die zur Abteilung zweier Würste (10) zusammenwirken, ein Formelement (36) auf der umlaufenden Bahn vorausläuft, das die Abteilstelle (48) zwischen den zwei zu trennenden Würsten (10) vor dem Trennen zentriert.

17. Trennvorrichtung nach Anspruch 16,
**dadurch gekennzeichnet, daß**
das bzw. die Formelemente (36) jeweils einen im wesentlichen V-förmigen, sich in Richtung des Wurststranges (10, 12) öffnenden Zentrierbereich (38) an seinem achsfernen Ende umfaßt.

18. Trennvorrichtung nach Anspruch 17,
**dadurch gekennzeichnet, daß**
der bzw. die V-förmigen Zentrierbereiche (38) jeweils einen Öffnungsbereich aufweisen, der mindestens so groß ist, wie das Kaliber (82) des Wurststranges (10, 12).

19. Trennvorrichtung nach einem der Ansprüche 16 bis 18,
**dadurch gekennzeichnet, daß**
das bzw. die Formelemente (36) derart ausgestaltet sind, daß während des Eingriffes von zwei Trennelementen die jeweils zu trennenden Würste (10) einen bestimmten Abstand aufweisen.

20. Trennvorrichtung nach einem der Ansprüche 1 bis 19,
**dadurch gekennzeichnet, daß**
sich die Trennelemente (40, 41, 42, 43) in ihrer Ausdehnung senkrecht zum Wurststrang (10, 12) über eine Breite erstrecken, die mindestens dem Kaliber (82) des Wurststranges (10, 12) entspricht.

21. Trennvorrichtung nach einem der Ansprüche 1 bis 20,
**dadurch gekennzeichnet, daß**
eines (42, 43) von jeweils zwei Trennelementen, die zum Abteilen von zwei Würsten (10) zusammenwirken, eine Klinge umfaßt und das jeweils andere (40, 41) dieser zwei Trennelemente einen Gegenhalter oder eine weitere Klinge umfaßt.

22. Verfahren zum Zerteilen von Wurststrängen an Abteilstellen in einzelne Würste oder Wurstketten mit gleicher Anzahl von Würsten, wobei der Wurststrang mit Förderbändern 6a, 6b an eine Trennvorrichtung herangeführt wird und an Abteilstellen zerschnitten wird,
**dadurch gekennzeichnet, daß**
die Förderbänder (6a, 6b) während des Schneidvorganges im Bereich der zu trennenden Abteilstelle (48) auf einen Abstand (83) größer als das Wurstkaliber (82) auseinandergezogen werden.

23. Verfahren nach Anspruch 22,
**dadurch gekennzeichnet, daß**
die zu trennende Abteilstelle (48) gleichzeitig mit dem Auseinanderziehen der Förderbänder (6a, 6b) zentriert wird.

24. Verfahren nach einem der Ansprüche 21 und 23,
**dadurch gekennzeichnet, daß**
während des Auseinanderziehens der Förderbänder (6a, 6b) zwischen den zu zerteilenden Würsten (10) ein definierter Abstand hergestellt wird, bevor die Abteilstelle (48) zerschnitten wird.

## Claims

1. Separating device for separating sausages (10) at division locations formed between individual sausages of a sausage string, with
at least two conveying belts (6a, 6b) moving into the same direction, receiving the sausage string between them and transporting it,
at least one first separator element (40) arranged on a first side of the sausage string, and at least one second separator element (42) arranged on the second side of the sausage string, the separator elements being driven such that they cooperate for separating the sausage string at division locations,
**characterized by**
means (60, 66) for providing a distance (83) between the conveying belts (6a, 6b) in the region of the respective division location (48) to be separated during the engagement of the two separator elements (40, 42), which distance is greater than the diameter of the sausage (82).

2. Separating device according to claim 1,
**characterized in that**
said at least one first separator element (40) rotates on circular paths about a first axle (45) and said at least second separator element (42) counterrotates on circular paths about a second axle (44), the axles (44, 45) being perpendicular to the direction of transport (24) of the sausage string (10, 12).

3. Separating device according to claim 2,
**characterized in that**
the means for providing the distance comprise a first spreading element (60) rotating together with one of the two separator elements (40, 42) and a second spreading element (66) rotating together with one of the two separator elements (40, 42), one of the two spreading elements (60, 66) keeping apart a first conveying belt (6a) from the sausage string (10, 12) during the engagement of the first with the second separator element and the other spreading element (66, 60) keeping apart a second conveying belt (6b) from the sausage string (10, 12) during the engagement of the first separator element with the second separator element.

4. Separating device according to claim 3,
**characterized in that**
the first and the second spreading element (60, 66) rotate together with the first separator element (40) about a common axle (45).

5. Separating device according to claim 3,
**characterized in that**
the first and the second spreading element rotate together with the second separator element (42) on a common axle (44).

6. Separating device according to claim 3,
**characterized in that**
one of the spreading elements rotates together with the first separator element (40) on a common axle (45) and one of the spreading elements rotates together with the second separator element (42) on a common axle (44).

7. Separating device according to one of claims 3 to 6,
**characterized by**
- at least one third separator element (41) rotating together with the first separator element (40) on the first axle (45),
- at least one fourth separator element (43), rotating together with the second separator element (42) on the second axle (44) on the other side of the sausage string (10, 12), the third and the fourth separator element (41, 43) cooperating during the rotation such that the sausage string (10, 12) is separated at division locations (48),
- at least one third spreading element (62), rotating together either with the third or with the fourth separator element,
- at least one fourth spreading element (68), rotating together either with the third or the fourth separator element,
one of the third and fourth spreading elements (68) keeping apart a first conveying belt (6a) from the sausage string (10, 12) during the engagement of the third separator element (41) with the fourth separator element (43), and the respective other one of the third and fourth spreading elements keeping apart a second conveying belt (6b) from the sausage string (10, 12) during the engagement of the third separator element (41) with the fourth separator element (43).

8. Separating device according to claim 7,
**characterized in that**
the third and the fourth spreading element (62, 68) rotate together with the third separator element (41) on a common axle (45).

9. Separating device according to claim 7,
**characterized in that**
the third and the fourth spreading element rotate together with the fourth separator element (43) on a common axle (44).

10. Separating device according to claim 7,
**characterized in that**
one of the third and fourth spreading elements rotates together with the third separator element (41) on a common axle (45) and the other one of the third and fourth spreading elements rotates together with the fourth separator element (43) on a common axle (44).

11. Separating device according to one of claims 7 to 10,
**characterized in that**
exactly two separator elements (42, 43; 40, 41) are provided per axle (44; 45) which from the respective-axle (44; 45) extend away from one another in essentially opposite directions.

12. Separating device according to one of claims 3 to 11,
**characterized in that**
the spreading elements (60, 62, 66, 68) comprise a bevel (72, 74) leading with respect to the direction of rotation, which during the rotation moves between the respective conveying belt (6a, 6b) and the sausage string (10, 12) to be kept apart, the bevel (72, 74) coming into contact with the conveying belt (6a, 6b) such that the conveying belt is moved away from the sausage string.

13. Separating device according to one of claims 3 to 12,
**characterized in that**
the spreading elements (60, 62, 66, 68) extend further away from the respective axle than the respective separator elements.

14. Separating device according to one of claims 3 to 13,
**characterized in that**
the ends (80) of the spreading elements (60, 62, 66, 68) remote from the axle are rounded.

15. Separating device according to one of claims 3 to 14,
**characterized in that**
the spreading elements (60, 62, 66, 68) comprise a centering bevel (64, 70) on the side facing the respective separator element (40, 41, 42, 43) in order to feed the division location (48) to the respective separator element.

16. Separating device according to one of claims 2 to 15,
**characterized in that**
at least one of the two separator elements which cooperate for separating two sausages (10) each is preceded by a form element (36) on the circular path, which form element centers the division location (48) between the two sausages (10) to be separated before the separation.

17. Separating device according to claim 16,
**characterized in that**
the form element(s) (36) comprise(s) each at its (their) end(s) remote from the axle an essentially V-shaped centering region (38) opening into the direction of the sausage string (10, 12).

18. Separating device according to claim 17,
**characterized in that**
the V-shaped centering region(s) (38) (each) comprise(s) an opening region which is at least as large as the diameter (82) of the sausage string (10, 12).

19. Separating device according to one of claims 16 to 18,
**characterized in that**
the form element(s) (36) is (are) embodied such that during the engagement of two separator elements the respective sausages (10) to be separated comprise a determined distance.

20. Separating device according to one of claims 1 to 19,
**characterized in that**
the separator elements (40, 41, 42, 43) extend perpendicularly to the sausage string (10, 12) over a breadth corresponding at least to the diameter (82) of the sausage string (10, 12).

21. Separating device according to one claims 1 to 20,
**characterized in that**
one (42, 43) of two separator elements each, which cooperate for separating two sausages (10), comprises a blade and the respective other one (40, 41) of these two separator elements comprises a countersupport or another blade.

22. Process for separating sausage strings at division locations into individual sausages or sausage chains with equal numbers of sausages, the sausage string being advanced to a separating device by means of conveying belts (6a, 6b) and cut at division locations,
**characterized in that**
the conveying belts (6a, 6b) are during the cutting process in the region of the division location (48) to be separated moved apart to a distance (83) greater than the diameter of the sausage (82).

23. Process according to claim 22,
**characterized in that**
the division location (48) to be separated is centered simultaneously with the moving apart of the conveying belts (6a, 6b).

24. Process according to one of claims 21 and 23,
**characterized in that**
during the moving apart of the conveying belts (6a, 6b) a defined distance is provided between the sausages (10) to be separated, before the division location (48) is cut.

## Revendications

1. Dispositif de séparation pour séparer des saucisses (10) en des points de séparation, qui sont formés entre les différentes saucisses d'un chapelet de saucisses, comportant
au moins deux bandes transporteuses (6a, 6b) se déplaçant dans la même direction, qui reçoivent entre elles les saucisses et les transportent,
au moins un premier élément séparateur (40), qui est disposé sur un premier côté du chapelet de saucisses et au moins un second élément séparateur (42), qui est disposé sur le second côté du chapelet de saucisses, les éléments séparateurs étant entraînés de manière telle qu'ils coopèrent pour séparer le chapelet de saucisses en des points de séparation,
**caractérisé par**
des dispositifs (60, 66) pour générer un écartement (83) entre les bandes transporteuses (6a, 6b) dans la zone de chaque point de séparation (48) à séparer, pendant la venue en prise des deux éléments séparateurs (40, 42), qui est plus grand que le calibre des saucisses (82).

2. Dispositif de séparation selon la revendication 1, **caractérisé en ce que** tournent en sens contraire le(s) premier(s) élément(s) séparateur(s) (40) sur une trajectoire circulaire autour d'un premier axe (45) et le(s) second(s) élément(s) séparateur(s) (42) sur une trajectoire circulaire autour d'un second axe (44), les deux axes (44, 45) étant perpendiculaires à la direction du sens de transport (24) du chapelet de saucisses (10, 12).

3. Dispositif de séparation selon la revendication 2, **caractérisé en ce que** les dispositifs générant l'écartement comportent un premier élément écarteur (60) tournant avec l'un des deux éléments séparateurs (40, 42) et un second élément écarteur (66) tournant avec l'un des deux éléments séparateurs (40, 42), l'un des deux éléments écarteurs (60, 66) maintenant une première bande transporteuse (6a) à distance du chapelet de saucisses (10, 12) lors de la venue en prise du premier élément séparateur avec le second et l'autre élément écarteur (66, 60) maintenant à distance du chapelet de saucisses (10, 12) une seconde bande transporteuse (6b) lors de la venue en prise du premier élément de séparation avec le second.

4. Dispositif de séparation selon la revendication 3, **caractérisé en ce que** le premier et le second élément d'écartement (60, 66) tournent ensemble avec le premier élément séparateur (40) autour d'un axe commun (45).

5. Dispositif de séparation selon la revendication 3, **caractérisé en ce que** le premier et le second élément d'écartement tournent ensemble avec le second élément séparateur (42) autour d'un axe commun (44).

6. Dispositif de séparation selon la revendication 3, **caractérisé en ce que** l'un des éléments écarteurs tourne sur un axe commun (45) avec le premier élément séparateur (40) et l'un des éléments écarteurs tourne sur un axe commun (44) avec le second élément séparateur.

7. Dispositif de séparation selon l'une des revendications 3 à 6, **caractérisé par**
- au moins un troisième élément séparateur (41), qui tourne avec le premier élément séparateur (40) sur le premier axe (45),
- au moins un quatrième élément séparateur (43), qui tourne ensemble avec le second élément séparateur (42) sur le second axe (44) de l'autre côté du chapelet de saucisses (10, 12), le troisième et le quatrième élément séparateur (41, 43) coopérant lors de la rotation de manière telle que le chapelet de saucisses (10, 12) est séparé aux points de séparation (48),
- au moins un troisième élément écarteur (62) qui tourne soit avec le troisième soit avec le quatrième élément séparateur,
- au moins un quatrième élément écarteur (68), qui tourne soit avec le troisième soit avec le quatrième élément séparateur,
l'un des troisième et quatrième éléments écarteurs (68) maintenant à distance une première bande transporteuse (6a) du chapelet de saucisses (10, 12) lors de la venue en prise du troisième (41) avec le quatrième élément séparateur (43), et l'autre des troisième et quatrième éléments écarteurs maintenant une seconde bande transporteuse (6b) à distance du chapelet de saucisses (10, 12) lors de la venue en prise du troisième (41) avec le quatrième élément séparateur (43).

8. Dispositif de séparation selon la revendication 7, **caractérisé en ce que** le troisième et le quatrième élément écarteur (62, 68) tournent ensemble avec le troisième élément séparateur (41) sur un axe commun (45).

9. Dispositif de séparation selon la revendication 7, **caractérisé en ce que** le troisième et le quatrième élément écarteur tournent ensemble avec le quatrième élément séparateur (43) sur un axe commun (44).

10. Dispositif de séparation selon la revendication 7, **caractérisé en ce que** l'un des troisième et quatrième éléments écarteurs tourne ensemble avec le troisième élément séparateur (41) sur un axe commun (45) et l'autre des troisième et quatrième éléments écarteurs tourne ensemble avec le quatrième élément séparateur (43) sur un axe commun (44).

11. Dispositif de séparation selon l'une des revendications 7 à 10, **caractérisé en ce que** précisément deux éléments séparateurs (42, 43 ; 40, 41) sont prévus par axe (44 ; 45) qui s'étendent en s'écartant l'une de l'autre de l'axe (44 ; 45) considéré sensiblement en direction opposée.

12. Dispositif de séparation selon l'une des revendications 3 à 11, **caractérisé en ce que** les éléments écarteurs (60, 62, 66, 68) présentent une arête biseautée (72, 74) saillant dans le sens de rotation (46, 47), qui tourne lors de la rotation entre la bande transporteuse (6a, 6b) considérée à maintenir à distance et le chapelet de saucisses (10, 12), la rampe (72, 74) venant en contact avec la bande transporteuse (6a, 6b) de manière telle, que la bande transporteuse est écartée du chapelet de saucisses.

13. Dispositif de séparation selon l'une des revendications 3 à 12, **caractérisé en ce que** les éléments écarteurs (60, 62, 66, 68) s'écartent plus loin de l'axe considéré que les éléments séparateurs considérés.

14. Dispositif de séparation selon l'une des revendications 3 à 13, **caractérisé en ce que** les extrémités (80) éloignées des axes des éléments écarteurs (60, 62, 66, 68) sont arrondies.

15. Dispositif de séparation selon l'une des revendications 3 à 14, **caractérisé en ce que** les éléments écarteurs (60, 62, 66, 68) comportent sur le côté orienté vers l'élément séparateur (40, 41, 42, 43) considéré une rampe de centrage (64, 70), pour amener le point de séparation (48) à l'élément séparateur considéré.

16. Dispositif de séparation selon l'une des revendications 2 à 15, **caractérisé en ce que** chaque fois au moins l'un des deux éléments séparateurs, qui coopèrent pour séparer deux saucisses (10) est précédé par un élément formé (36) sur la trajectoire circulaire, qui centre le point de séparation (48) entre les deux saucisses à séparer (10) avant la séparation.

17. Dispositif de séparation selon la revendication 16, **caractérisé en ce que** le ou les éléments formés (36) comprennent une zone de centrage (38) s'ouvrant dans la direction du chapelet de saucisses (10, 12) à son extrémité éloignée de l'axe.

18. Dispositif de séparation selon la revendication 17, **caractérisé en ce que** le ou les zones de centrage en V (38) comportent chacune une zone d'ouverture, qui est au moins aussi grande que le calibre (82) du chapelet de saucisses (10, 12).

19. Dispositif de séparation selon l'une des revendications 16 à 18, **caractérisé en ce que** le ou les éléments formés (36) sont conformés de manière telle, que les saucisses (10) considérées à séparer présentent un certain écartement pendant la venue en prise de deux éléments séparateurs.

20. Dispositif de séparation selon l'une des revendications 1 à 19, **caractérisé en ce que** dans leur dimension les éléments séparateurs (40, 41, 42, 43) s'étendent perpendiculairement au chapelet de saucisses (10, 12) sur une largeur qui correspond au moins au calibre (82) du chapelet de saucisses (10, 12).

21. Dispositif de séparation selon l'une des revendications 1 à 20, **caractérisé en ce que** l'un (42, 43) de deux éléments séparateurs, qui coopèrent pour séparer deux saucisses (10), comporte une lame et l'autre (40, 41) de ces deux éléments séparateurs, comporte un contre-support ou une autre lame.

22. Procédé pour séparer des chapelets de saucisses en des points de séparation en saucisses distinctes ou chaînes de saucisses d'un nombre identique de saucisses, le chapelet de saucisses étant amené avec des bandes transporteuses (6a, 6b) à un dispositif de séparation et étant coupé en des points de séparation, **caractérisé en ce que** les bandes transporteuses (6a, 6b) sont écartées pendant l'opération de coupe dans la zone des points de séparation à séparer (48) à une distance (83) plus grande que le calibre de saucisse (82).

23. Procédé selon la revendication 22, **caractérisé en ce que** le point de séparation (48) est centré simultanément à l'écartement des bandes transporteuses (6a, 6b).

24. Procédé selon l'une des revendications 21 et 23, **caractérisé en ce que** pendant l'écartement des bandes transporteuses (6a, 6b) un écartement défini est créé entre les saucisses à séparer (10), avant que soit coupé le point de séparation (48).
